# EUROPÄISCHE PATENTSCHRIFT

(11) **EP 3 165 062 B1**
(45) Veröffentlichungstag und Bekanntmachung des Hinweises auf die Patenterteilung: **11.11.2020**
(21) Anmeldenummer: 16190327.3
(22) Anmeldetag: 23.09.2016
(51) Int. Cl.: A01B 69/04, A01D 41/127

(54) **LANDWIRTSCHAFTLICHE ARBEITSMASCHINE MIT EINER UMFELDDETEKTIONSEINRICHTUNG**
AGRICULTURAL VEHICLE WITH AN ENVIRONMENT DETECTION DEVICE
MACHINE DE TRAVAIL AGRICOLE AVEC UN DISPOSITIF DE DÉTECTION D'ENVIRONNEMENT

(30) Priorität: 03.11.2015 DE 102015118767
(43) Veröffentlichungstag der Anmeldung: 10.05.2017
(73) Patentinhaber: CLAAS Selbstfahrende Erntemaschinen GmbH, 33428 Harsewinkel (DE)
(72) Erfinder: Middelberg, René, 49080 Osnabrück (DE); Krause, Thilo, 39249 Glinde (DE)
(74) Vertreter: CLAAS Gruppe

(56) Entgegenhaltungen:
- EP-A1- 2 873 315
- EP-A2- 0 887 660
- EP-A2- 1 332 659
- EP-A2- 2 517 543

## Beschreibung

Die Erfindung betrifft eine Landwirtschaftliche Arbeitsmaschine mit einer Umfelddetektionseinrichtung zur bereichsweisen Erfassung eines Umfeldes und ein oder mehrere steuerbare Funktionselemente nach dem Oberbegriff des Anspruchs 1.

Zur Entlastung des Fahrzeugführers und Erhöhung der Effizienz einer landwirtschaftlichen Arbeitsmaschine auf einem Feld werden heutzutage zunehmend die Steuerung des Fahrzeuges, z.B. entlang einer Bestandskante, und die Steuerung von Funktionselementen des Fahrzeuges, wie z.B. die Haspelhöhe beim Mähdrescher oder die Häckselwerkleistung beim Feldhäcksler, automatisch anhand der Umgebungsbedingungen und dem zu erwartenden Erntegutdurchsatz geregelt. Dazu werden landwirtschaftliche Arbeitsmaschinen im Stand der Technik häufig mit Umfelddetektionseinrichtungen ausgestattet, deren Umfelddetektionssignale zur Bodenkonturbestimmung oder Bestimmung der Bestandsdichte herangezogen werden. Insbesondere Umfelddetektionseinrichtungen in Form von Laserscannern zur Ermöglichung einer automatischen Steuerung von landwirtschaftlichen Arbeitsmaschinen sind im Stand der Technik bekannt.

DE19726917 A1 und EP 1269823 A1 beschreiben ein System, z.B. mit einem Lasersensors, zur Erfassung der Bodenkontur mit einer einzigen Scanebene und zur Steuerung von Funktionselementen.

Nachteilig ist hier, dass der Sensor auf die Bodenkontur beschränkt ist. Auch ist nachteilig, dass aufgrund der einzigen Scanebene steuerseitig nur mit erheblicher Trägheit reagiert werden kann, wodurch gewisse Ungenauigkeiten in der automatischen Steuerung zu erwarten sind. Des Weiteren muss hier ein Kompromiss bezüglich Fernbereich, damit verbunden z.B. eine frühzeitige Warnung bei Hindernissen, und dem Nahbereich, damit verbunden eine höhere Auflösung und ein kleiner toter Winkel, eingegangen werden.

Aus der EP 2 517 543 A2 ist eine landwirtschaftliche Maschine gemäß dem Oberbegriff es Anspruches 1 bekannt, welche eine Lasermessvorrichtung zum Abtasten einer Boden und/oder Erntegutkontur innerhalb eines Abtastbereiches umfasst. Der Abtastbereich wird in Abhängigkeit von dem an der landwirtschaftlichen Maschine angebauten Anbaugerät eingestellt.

EP1266554 B1 beschreibt eine Vorrichtung zur Bearbeitungsgrenzendetektion mittels eines an der Fahrerkabine eines landwirtschaftlichen Fahrzeuges angebrachten Laserabstandssensors, wobei die Erfassungsbereichsfläche in Fahrtrichtung (Reichweite des Erfassungsbereichs) und quer dazu (Breite des Erfassungsbereichs) verändert werden kann - in Abhängigkeit der Umgebungs- und Fahrzeugbedingungen. Als nachteilig ist hier der hohe regulatorische Aufwand anzusehen, mittels dem hier der Erfassungsbereich gegebenheitsspezifisch angepasst werden muss. Auch sind eine lückenlose Abtastung sowie eine Kartierung des Feldes aufgrund der sich ändernden Erfassungsbereichsfläche schwer durchführbar. Des Weiteren verfügt die Steuer- und Regeleinrichtung bei Änderung der Richtung, der Breite und der Reichweite des Erfassungsbereichs nur über unvollständige oder unpräzise Daten zur Steuerung von Funktionselementen. Ebenfalls ist nachteilig, dass die Umfelddetektionseinrichtung auf die Bestandskantendetektion beschränkt ist.

Es ist deshalb Aufgabe der Erfindung, die beschriebenen Nachteile des Standes der Technik zu vermeiden und insbesondere eine Umfelddetektionseinrichtung zu schaffen, welche mindestens im Nah- und Fernbereich zuverlässig detektiert, die Anzahl der erforderlichen Sensoren reduziert, und die Vorlaufzeiten, die Trägheitsfreiheit der Steuerung sowie die Präzision der automatischen Steuerung erhöht.

Diese Aufgabe wird erfindungsgemäß durch die kennzeichnenden Merkmale des Anspruchs 1 gelöst.

Indem eine landwirtschaftliche Arbeitsmaschine, welche ein oder mehrere steuerbare Funktionselemente und eine Umfelddetektionseinrichtung zur bereichsweisen Erfassung eines Umfeldes umfasst, wobei die Umfelddetektionseinrichtung Umfelddetektionssignale generiert, die in einer der landwirtschaftlichen Arbeitsmaschine zugeordneten Steuer- und Regeleinrichtung verarbeitbar sind und die Umfelddetektionseinrichtung als Scanner ausgebildet ist, der das Umfeld in Scanebenen abtastet und jeder Scanebene die Steuerung von Funktionselementen zugeordnet ist lässt sich im Nah- und Fernbereich zuverlässiger detektieren, die Anzahl der erforderlichen Sensoren und damit die Kosten reduzieren, und die Vorlaufzeiten, die Trägheitsfreiheit der Steuerung sowie die Präzision der automatischen Steuerung erhöhen.

In einer vorteilhaften Ausgestaltung der Erfindung sind die Umfelddetektionssignale elektromagnetische Wellen, bevorzugt Laserstrahlen. Die Nutzung elektromagnetischer Wellen, insbesondere in Form eines Laserstrahls, hat vor allem den Vorteil einer guten Fokussier- und Auflösbarkeit und einer großen Reichweite der Umfelddetektionssignale gegenüber akustischen Wellen. Laser haben zudem den Vorteil eines sehr engen Frequenzbereichs.

Auf technisch einfache Weise lassen sich zur Abtastung Umfelddetektionssignale aussenden, die reflektierten Umfelddetektionssignale wieder empfangen und ein Ergebnissignal generieren, indem die Umfelddetektionseinrichtung als Scanner ausgebildet ist. Diese Ausgestaltung hat zudem den Vorteil, kostengünstig zu sein.

In einer weiteren vorteilhaften Ausgestaltung der Erfindung wird das Umfeld aus einem in Fahrtrichtung und in Reichweite des Umfelddetektionssignals befindlichen Teil der agrarwirtschaftlichen Nutzfläche gebildet. Dies hat unter anderem den Effekt, dass unnötiges Abtasten und damit Belastungen des Scanners und Reduzierung dessen Lebensdauer vermieden werden. Durch Konzentration auf die für die Lösung der Aufgabe notwendigen Informationen wird zudem die Menge an zu verarbeitenden Daten gering gehalten.

In einer weiteren vorteilhaften Ausgestaltung der Erfindung überragt die seitliche Ausdehnung des Umfeldes zumindest teilweise die Breite der landwirtschaftlichen Arbeitsmaschine, wobei die Breite der landwirtschaftlichen Arbeitsmaschine Anbauten an diese beinhalten kann. Dies stellt sicher, dass Bodenmerkmale, Objekte und/oder Hindernisse nicht nur im direkten Arbeitsbereich der landwirtschaftlichen Arbeitsmaschine, sondern auch im und jenseits des seitlichen Grenzbereichs der landwirtschaftlichen Arbeitsmaschine registriert werden können und das Risiko einer Beschädigung der landwirtschaftlichen Arbeitsmaschine reduziert wird. Auch bewirkt dies eine zuverlässige Erfassung von Bodenmerkmalen, Objekten und/oder Hindernissen, welche an den Arbeitsbereich der landwirtschaftlichen Arbeitsmaschine angrenzen, wie zum Beispiel die Bestandskante.

Gemäß der Erfindung tastet die Umfelddetektionseinrichtung das bereichsweise erfasste Umfeld in vier Scanebenen ab. Dies bewirkt, dass zu einem beliebigen Zeitpunkt t ein größerer Informationsgehalt und eine größere Informationsdichte vorliegen. Durch Einsatz mehrere Scanebenen lässt sich zudem die Schwenk- oder Drehfrequenz und die Signalfrequenz reduzieren, welches eine längere Lebensdauer der Umfelddetektionseinrichtung bedeuten würde.

Weiterhin ist gemäß der Erfindung vorgesehen, dass das von der Umfelddetektionseinrichtung bereichsweise erfasste Umfeld einen Nah-, Mittel und Fernbereich umfasst und jedem Bereich keine, eine oder mehrere Scanebenen zugeordnet sind. Dies bewirkt, dass die Scanebenen verschieden beabstandet sind und das bereichsweise erfasste Umfeld in Längsrichtung zu einem Zeitpunkt t aufspreizen. Zudem bewirkt es, dass unterschiedliche Bestandsdurchtrittstiefen des Umfelddetektionssignals vorliegen, sodass lediglich eine Umfelddetektionseinrichtung benötigt wird.

In einer weiteren besonders bevorzugten Ausgestaltung der Erfindung errechnet die Steuer- und Regeleinrichtung aus der Pulslaufzeit des reflektierten Umfelddetektionssignals eine Entfernung und/oder eine Verteilungsdichte. Mit einer Entfernungsberechnung basierend auf dem Pulslaufzeitverfahren wird ein Verfahren angewendet, welches im Nah- und Fernbereich gleichermaßen nutzbar ist und präzise Messergebnisse liefert. Die Bestimmung der Verteilungsdichte ermöglicht zum Beispiel die Unterscheidung zwischen massiven Objekten und Erntegutbestand, wodurch unter anderem Hindernisse sicherer identifiziert werden können.

Damit die einzelnen ermittelten Entfernungen und Verteilungsdichten in Zusammenhang gesetzt werden können, berechnet die Steuer- und Regeleinrichtung aus den errechneten Entfernungen und/oder Verteilungsdichten eine Bodenkontur und/oder einen Bestandsdichteverlauf und/oder kartiert die agrarwirtschaftliche Nutzfläche. Hierdurch lassen sich Objekte, Hindernisse und/oder Bodenmerkmale, wie zum Beispiel die Bestandskante, zuverlässiger identifizieren. Insbesondere lässt sich durch Hinzunahme des Bestandsdichteverlaufs eine digitale Karte, zum Beispiel eine Ertragskarte, erstellen, welche unter anderem für eine gezielte Düngung eingesetzt werden kann.

Des Weiteren lässt sich durch die breite und weite Abdeckung des Umfeldes durch mehrere Scanebenen eine satellitengestützten Routenführung teilweise simulieren, wodurch sich ein teures GPS-Routenführungssystem erübrigen kann. Zudem kann die simulierte satellitengestützte Routenführung zuverlässig an Baumgrenzen und unabhängig von der Satellitensignalflächenabdeckung funktionieren.

In einer weiteren besonders bevorzugten Ausgestaltung der Erfindung umfasst das Funktionselement ein oder mehrerer Arbeitsorgane einer landwirtschaftlichen Arbeitsmaschine, bevorzugt einer selbstfahrenden Erntemaschine, bevorzugt eines Mähdrescher, und/oder ein die landwirtschaftliche Arbeitsmaschine begleitendes Transportfahrzeug. Die Ausgestaltung der Funktionselemente als ein oder mehrere Arbeitsorgane hat den Vorteil, dass mehrere zusammenwirkende technische Einheiten je nach Anforderung einzeln oder im Verbund angesprochen werden können. Als Beispiel sei hier das Funktionselement Dreschwerk zu nennen, welches sich in die Arbeitsorgane und Funktionselemente Beschleunigungstrommel, Dreschtrommel und Umkehrtrommel gliedern lässt.

Gemäß einer weiteren vorteilhaften Ausgestaltung der Erfindung ist vorgesehen, dass einer, mehreren oder sämtlichen Scanebenen die Steuerung von einem, mehreren oder sämtlichen Funktionselementen zugeordnet ist. Dies hat zum einem den Effekt, dass mehrere Arbeitsabläufe gleichzeitig gesteuert werden können, während zum anderen Informationen aus den verschiedenen abgetasteten Abständen selektiv zur Verfügung stehen. So können die Scanebenen den einzelnen Funktionselementen in Abhängigkeit der Umfeldbedingungen spezifisch zugeordnet werden.

In einer weiteren besonders bevorzugten Ausgestaltung der Erfindung erfolgt eine kurzfristige präzise Steuerung durch Auswertung der im Nahbereich liegenden Scanebenen und eine frühzeitige grobe Steuerung der Funktionselemente durch Auswertung einer oder mehrerer im Mittel- und/oder Fernbereich liegenden Scanebenen. Der kleinere Bodenscanwinkel im Nahbereich bewirkt eine Verkleinerung des toten Winkels, wodurch Bodenmerkmale, Objekte und/oder Hindernisse zuverlässiger erfasst werden können. Zudem nimmt bei den kürzeren, der landwirtschaftlichen Arbeitsmaschine nähere gelegenen Scanebenen die Abtastfrequenz, und damit verbunden die Auflösung, zu. Hierdurch kann der Regler die Funktionselemente in nahezu Echtzeit auf die vorliegenden Gegebenheiten in unmittelbarer Nähe präzise anpassen und eine höhere Effizienz erreichen, indem Bestandskanten, Spritzspuren oder Schwaden genauer abgefahren werden können. Durch die Fernbereichsabtastung und die damit verbundene längere Vorwarnzeit können Parameteränderungen an den Funktionselementen frühzeitig, sukzessiv und materialschonend durchgeführt werden.

In einer weiteren besonders bevorzugten Ausgestaltung der Erfindung generiert die Umfelddetektionseinrichtung durch Auswertung eines Umfelddetektionssignals einer oder mehrerer Scanebenen ein Ergebnissignal, dass die Position eines Hindernisses im Umfeld umfasst und dass das Ergebnissignal an die Steuer- und Regeleinrichtung übergibt und die Steuer- und Regeleinrichtung aus diesem Ergebnissignal Lenk- und/oder Steuersignale für ein oder mehrere Funktionselemente der landwirtschaftlichen Arbeitsmaschine, insbesondere das hydraulische Lenksystem, das Antriebssystem, das hydraulische Bremssystem und/oder das Schneidwerk, generiert. Dies bewirkt, dass die landwirtschaftliche Arbeitsmaschine bei Hindernissen im bereichsweise erfassten Umfeld, wie zum Beispiel Bäumen oder Telegraphenmasten, automatisch mehrerer Funktionselemente anpassen und/oder ausweichen kann, um Beschädigungen an der landwirtschaftlichen Arbeitsmaschine durch das Hindernis zu vermeiden.

In einer weiteren besonders bevorzugten Ausgestaltung der Erfindung erfolgt die Detektion niedriger und/oder kleiner Hindernisse durch Auswertung der im Nahbereich liegenden Scanebenen und die Detektion hoher und/oder voluminöser Hindernisse durch Auswertung einer oder mehrerer im Mittel- und/oder Fernbereich liegenden Scanebenen. Je nach Größe des Hindernisses und Entfernung zur landwirtschaftlichen Arbeitsmaschine wird seitens der Steuer- und Regeleinrichtung zwischen der Einleitung eines Ausweichmanöver, einen Not-Stopp und/oder eines Hebens des Schneidwerks ausgewählt. Dabei können Ausweichmanöver aufgrund der benötigten längeren Vorlaufzeit bevorzugt durch Umfelddetektionssignale des Fernbereichs bewirkt werden. Der Nahbereich hat aufgrund seiner höheren Bestandsdurchtrittstiefe, einer geringeren Abschattung durch den kleineren toten Winkel, und der geringeren Bestandsdichte, und die höhere Abtastrate eine höhere Wahrscheinlichkeit zur Erfassung kleinerer und niedriger Hindernisse, und würde aufgrund der geringeren Vorlaufzeit insbesondere für die Auslösung des Not-Stopps oder das Heben des Erntegutbergungsvorsatzes dienen.

In einer weiteren besonders bevorzugten Ausgestaltung der Erfindung generiert die Umfelddetektionseinrichtung durch Auswertung eines Umfelddetektionssignals einer oder mehrerer Scanebenen ein Ergebnissignal, das die Bestandskantenposition, die Bestandshöhe, den Bestandshöhenverlauf und/oder den Bestandskantenverlauf im Umfeld umfasst und welches an die Steuer- und Regeleinrichtung übergeben wird, die aus diesem Ergebnissignal Lenk- und/oder Steuersignale für ein oder mehrere Funktionselemente der landwirtschaftlichen Arbeitsmaschine generiert. Dies bewirkt, dass zum einen, basierend auf dem gescannten Nahbereich, die landwirtschaftliche Arbeitsmaschine präzise an der Bestandskante geführt werden und die Haspel auf die optimale Höhe eingestellt werden kann. Zum anderen können durch die größere Breite der Scanebenen im Fernbereich der Verlauf der Bestandskante zuverlässiger verfolgt und insbesondere unnötigen Richtungskorrekturen aufgrund kurzer Unregelmäßigkeiten im Bestandskantenverlauf vermieden werden.

Auf technisch einfache Weise lässt sich die Führung an der Bestandskante und die Anpassung an die Bestandshöhe bewirken, wenn die Funktionselemente das hydraulische Lenksystem und/oder die Haspel beinhalten. Damit kann sowohl der Seitenabstand der Schneidwerk zur Bestandskante als der Höhenabstand der Haspel zum Bestand reguliert werden.

In einer weiteren besonders bevorzugten Ausgestaltung der Erfindung generiert die Umfelddetektionseinrichtung durch Auswertung eines Umfelddetektionssignals einer oder mehrerer Scanebenen ein Ergebnissignal, dass das Feldende im Umfeld umfasst und das an die Steuer- und Regeleineinrichtung übergeben wird, welche aus diesem Ergebnissignal Lenk- und/oder Steuersignale für ein oder mehrere Funktionselemente der landwirtschaftlichen Arbeitsmaschine, welche das hydraulische Steuersystem, das hydraulisches Bremssystem, das Antriebssystem und/oder das Schneidwerk beinhalten, generiert. Dies bewirkt, dass am Feldende das Schneidwerk automatisch in eine Sicherheitsposition gehoben, das Fahrzeug aus der Spur gelenkt und in die nächste Spur geführt werden kann.

Weitere vorteilhafte Ausgestaltungen sind Gegenstand weiterer Unteransprüche und werden nachfolgend an Hand von in mehreren Figuren dargestellten Ausführungsbeispiele beschrieben. Es zeigen:
- Figur 1: eine schematische Ansicht einer als Mähdrescher ausgeführten landwirtschaftlichen Arbeitsmaschine eine Umfelddetektionseinrichtung umfassend
- Figur 2: eine schematische Darstellung der erfindungsgemäßen Scanebenen im bereichsweise erfassten Umfeld (Blick von oben)
- Figur 3: eine schematische Darstellung der erfindungsgemäßen Scanebenen im bereichsweise erfassten Umfeld (Seitenansicht) - Erfassung von Hindernissen
- Figur 4: eine schematische Darstellung der erfindungsgemäßen Scanebenen im bereichsweise erfassten Umfeld (Seitenansicht) - Erfassung des Feldendes
- Figur 5: Regel- und Steuer Diagramm am Beispiel eines großen Hindernisses
- Figur 6: Regel- und Steuer Diagramm am Beispiel eines kleinen Hindernisses

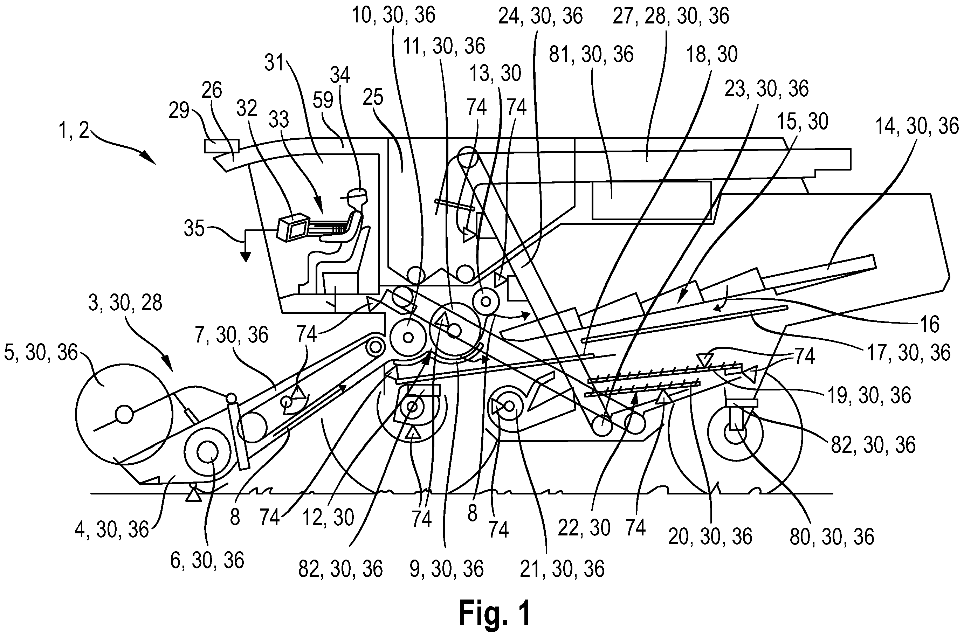

Bei der dargestellten landwirtschaftlichen Arbeitsmaschine in Figur 1 bis 4 handelt es sich um einen selbstfahrenden Mähdrescher. Es liegt im Rahmen der Erfindung, dass die landwirtschaftlichen Arbeitsmaschine auch als eine andere selbstfahrende Erntemaschine, unter anderem ein Feldhäcksler, oder ein Systemträger, zum Beispiel ein Traktor, ausgeführt sein kann.

Die in Fig. 1 schematisch dargestellte, als Mähdrescher 2 ausgeführte landwirtschaftliche Arbeitsmaschine 1 besitzt in ihrem frontseitigen Bereich ein Schneidwerk 3, welches aus Messerbalken 4, der Haspel 5 und der Einzugsschnecke 6 besteht. Das Schneidwerk 3 ist in an sich bekannter Weise mit dem Schrägförderer 7 des Mähdreschers 2 verbunden. Die Pflanzen werden durch den Messerbalken 4 geschnitten und das Erntegut mittels Haspel 5 der Einzugsschnecke 6 zugeführt. Der an den Schrägförderer 7 übergebende Erntegutstrom 8 wird in dem obenseitigen, rückwärtigen Bereich des Schrägförderers 7 an die untenseitig zumindest teilweise von einem Dreschkorb 9 ummantelten Beschleunigungstrommel 10 und danach an die zumindest teilweise von einem Dreschkorb 9 ummantelte Dreschtrommel 11 des Dreschwerks 12 des Mähdreschers 2 übergeben. Eine der Dreschtrommel 11 nachgeordnete Umlenktrommel 13 im Dreschwerk 12 lenkt den im rückwärtigen Bereich des Dreschwerks 12 aus diesem austretenden Erntegutstrom 8 so um, dass er unmittelbar an eine als Hordenschüttler 14 ausgeführte Trenneinheit 15 übergeben wird. Auf dem rotierenden Hordenschüttler 14 wird der Erntegutstrom 8 so gefördert, dass in dem Erntegutstrom 8 enthaltene freibewegliche Körner 16 im untenseitigen Bereich des Hordenschüttlers 14 abgeschieden werden. Sowohl die am Dreschkorb 9 als auch am Hordenschüttler 14 abgeschiedenen Körner 16 werden über Rücklaufboden 17 und Vorbereitungsboden 18 einer aus mehreren Siebebenen 19, 20 und einem Gebläse 21 bestehenden Reinigungseinheit 22 zugeführt. Der gereinigte Körnerstrom wird schließlich mittels einer Kornschnecke 23 und einem Elevator 24 an einen Korntank 25 übergeben. Der Korntank 25 kann über ein Korntankentleerungsrohr 27 entleert werden. Dabei stellen sowohl das Korntankentleerungsrohr 27 als auch das Schneidwerk 3 jeweils einen Anbau 28 dar, welcher über die Abmessungen der restlichen landwirtschaftlichen Arbeitsmaschine 1 hinausgeht.
An der Kabinendachkante 26 befindet sich eine Umfelddetektionseinrichtung 29, hier in Form eines Scanners 72, genauer eines Laserscanners 40. Im Folgenden werden die Arbeitsorgane 36, unter anderem der Messerbalken 4, die Haspel 5, die Beschleunigungstrommel 10, oder dergleichen und deren Gruppierungen, unter anderem das Schneidwerk 3, das Dreschwerk 12, die Trenneinheit 15, die Reinigungseinheit 22, oder dergleichen als Funktionselemente 30 der landwirtschaftlichen Arbeitsmaschine 1 bezeichnet. Das Funktionselement 30 umfasst die elektronischen und die mechanischen Komponenten eines Arbeitsorgans 36 und/oder die Gruppierung von Arbeitsorganen zu Funktionselementen 30. Somit lassen sich die Funktionselemente 30 in hierarchische Ordnungen, das heißt Gruppen und deren Untereinheiten, gliedern. Exemplarisch im Falle eines Mähdreschers 2 wie folgt:
- Fahrzeugsteuerungseinheit: hydraulisches Lenksystem 80, hydraulisches Bremssystem 82, Antriebssystem 81, Variator
- Schneidwerk 3: Haspel 5, Messerbalken 4
- Dreschwerk 12: Beschleunigungstrommel 10, Dreschtrommel 11, Dreschkorb 9, Umlenktrommel 13
- Trenneinheit 15: Schüttlersystem, rotierendes Abscheidesystem, Rücklaufboden 17
- Reinigungseinheit 22: Siebebene 19,20; Gebläse 21

Die Aufzählung der Gruppen und Untereinheiten der Funktionselemente 30 ist nicht erschöpfend, sondern lediglich exemplarisch aufgeführt. Entsprechendes gilt für andere landwirtschaftliche Arbeitsmaschinen 1.

Weiter verfügt die landwirtschaftliche Arbeitsmaschine 1 über eine Fahrzeugkabine 31 in der zumindest eine mit einer Anzeigeeinheit 32 versehene Steuer- und Regeleinrichtung 33 angeordnet ist, mittels derer automatisch, oder vom Bediener 34 der landwirtschaftlichen Arbeitsmaschine 1 initiiert, eine Vielzahl von Funktionselementen 30 in noch näher zu beschreibenden Weise gesteuert werden können. Die Steuer- und Regeleinrichtung 33 kommuniziert über ein sogenanntes Bussystem 35 in an sich bekannter Weise mit der Umfelddetektionseinrichtung 29 und einer Vielzahl von Sensorsystemen 74 in den Funktionselementen 30. Einzelheiten bezüglich der Struktur eines Großteils der Sensorsysteme 74 in den Funktionselementen 30 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 74 in den Funktionselementen 30 nicht nochmals beschrieben wird.

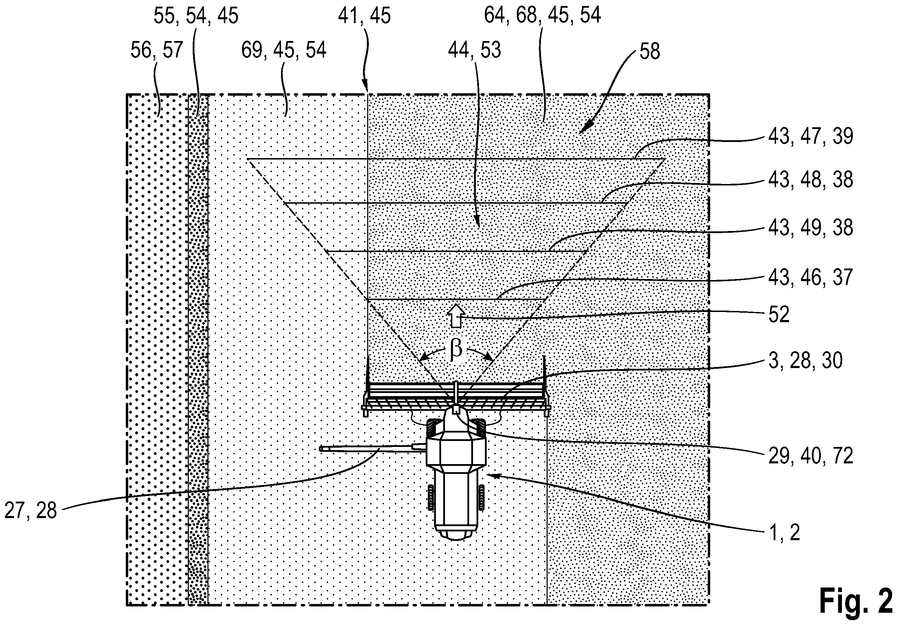

In Figur 2 ist eine als Mähdrescher 2 ausgeführte landwirtschaftliche Arbeitsmaschine 1 mit einer als Laserscanner 40 ausgeführten Umfelddetektionseinrichtung 29 aus der Vogelperspektive dargestellt. In diesem Ausführungsbeispiel ist der Laserscanner 40 mittig an der vorderen Kabinendachkante 26 der landwirtschaftlichen Arbeitsmaschine 1 angebracht, welche in erfindungsgemäßer Weise mittels einer Vielzahl von Scanebenen 43, hier vier Scanebenen 46,47,48,49, entlang einer Bestandskante 41 gesteuert wird. Zudem ist das vom Laserscanner 40 bereichsweise erfasste Umfeld 44 dargestellt, welches in diesem Ausführungsbeispiel vier Scanebenen 46-49 beinhaltet. Die Umfelddetektionssignale 42 werden von elektromagnetischen Wellen gebildet, im dargestellten Ausführungsbeispiel Laserstrahlen 73, welche von einem Bodenmerkmal 45, Hindernis 65 oder Objekt 51 reflektiert werden. Als Umfelddetektionseinrichtungen 29 können somit unter anderem Lidare, Laserscanner 40 oder Radare zur Anwendungen kommen.
Die gemessenen physikalischen Eigenschaften des Umfelddetektionssignals 42 können neben der Pulslaufzeit erfindungsgemäß auch die Amplitude, die Frequenz und die Phase umfassen. Beim Pulslaufzeitverfahren sendet die Umfelddetektionseinrichtung 29 Lichtpulse aus und misst die Zeit, die das Licht benötigt, bis es wieder von einem Bodenmerkmal 45, Hindernis 65 oder Objekt 51 zurückkommt. Aus der benötigten Zeit lässt sich dann der dazugehörige Abstand berechnen. Die Verteilungsdichte stellt eine abgeleitete Größe dar, welche auf dem Lückenvolumen zwischen den Pflanzen basiert. Dieses Lückenvolumen führt zu unterschiedlichen schwankenden Entfernungsmessungen nach einem bestimmten Muster. Während massive Objekte 51, massive Hindernisse 65 und massive Bodenmerkmale 45 eine Verteilungsdichte von Eins oder nahe Eins besitzen, hat ein Pflanzenbestand eine Verteilungsdichte zwischen Null und signifikant geringer als Eins. Zur Berechnung der Entfernung wird ein an sich bekanntes und daher nicht näher beschriebenes Pulslaufzeitverfahren verwendet. Zudem ist es denkbar, dass ein Phasen- oder ein Frequenzlaufzeitverfahren, bei geringen Entfernungen ein Triangulationsverfahren, zur Anwendung kommt. Erfindungsgemäß kann die Umfelddetektionseinrichtung 29 eine oder mehrere emittierende und detektierende Einheiten besitzen. Die Abtastung der einzelnen Scanebenen 43 erfolgt über bekannte Mechanismen zur Ausrichtung von Umfelddetektionssignalen 42. In einer vorteilhaften Ausgestaltung werden drehbare Spiegel zum Schwenken des Umfelddetektionssignals 42 verwendet. In einer weiteren vorteilhaften Ausgestaltung wird die Umfelddetektionseinrichtung 29 geschwenkt. Die Abtastung kann kontinuierlich oder diskret, in Form von Einzelpunktmessungen, verlaufen. Gemäß einer vorteilhaften Ausgestaltung werden die Scanebenen 43 mit schnell aufeinanderfolgenden Einzelpunktmessungen quasi-kontinuierlich abgetastet. Das bereichsweise erfasste Umfeld 44 stellt erfindungsgemäß eine in Fahrtrichtung 52 befindliche, mit einem Scanneröffnungswinkel (β) aufgespannte und eine sich, von der landwirtschaftlichen Arbeitsmaschine 1 ausgehend, ausweitende dreiseitige Teilfläche 53 der agrarwirtschaftlichen Nutzfläche 54 dar. Dabei beinhaltet die agrarwirtschaftliche Nutzfläche 54 ebenfalls die Grenze 55 zu angrenzenden Flächen 56 und kann somit auch einen angrenzenden Graben, eine Baumgrenze oder sonstige begrenzende Bodenmerkmale 45, Hindernisse 65 und/oder Objekte 51 umfassen. Der Begriff Bodenmerkmal 45 umfasst alle detektierbaren Merkmale im Umfeld 58, welche sich von einem weitestgehend ebenen Erdboden 57 absetzen und mit diesem auf natürliche Weise verbunden sind oder aus dem Erdboden geformt sind. Es beinhaltet Pflanzen, Gräben, Aufschüttungen, Spurrillen, Stoppelfeld, die Bestandskante 41 und Bestandshöhe 90. Der Begriff Objekt 51 umfasst alle übrigen detektierbaren Merkmale im Umfeld 58, welche sich von einem weitestgehend ebenen Erdboden 57 absetzen. Es beinhaltet Steine, Tiere, Menschen, Telegraphen- und Strommasten, andere Fahrzeuge, Schwaden und abgeschnittenes Erntegut. Das bereichsweise erfasste Umfeld 44 der Umfelddetektionseinrichtung 29 lässt sich in einen Nah- 37, Mittel- 38 und Fernbereich 39 unterteilen, wobei erfindungsgemäß keine, eine oder mehrere Scanebenen 43 einem Bereich 37,38,39 zugeordnet sein können. Der Nahbereich 37 umfasst die Scanebene 46, welche sich dem Schneidwerk 3 am nächsten befindet. Der Fernbereich 39 umfasst die Scanebene 47, welche am weitesten vom Schneidwerk 3 entfernt ist. Der Mittelbereich 38, welcher je nach Bedarf und nach Anzahl der Scanebenen noch weiter untergliedert werden kann, umfasst die Scanebenen 48,49 zwischen Nah- 37 und Fernbereich 39. Dabei kann eine Scanebene 43 eine vielfache Einzelpunktabtastung auf einer gedachten Linie zwischen den Seiten der dreiseitigen Teilfläche 53 des bereichsweise erfassten Umfeldes 44 darstellen. Die Scanebene ist dabei als geometrische Ebene zu verstehen. Erreichten die einzelnen Strahlen der vielfachen Einzelpunktabtastung in einer Scanebene ohne Hindernisse im Strahlweg eine planen, nicht geneigten Erdboden, so erhält man den Verlauf einer Scanebene. Der Verlauf einer Scanebene 43 kann orthogonal zur Fahrtrichtung 52 oder im Übergangsbereich zur parallelen Ausrichtung zur Fahrtrichtung 52 liegen. Dabei können die Scanebenen einen parallel-beabstandeten als auch einen sich kreuzenden Verlauf besitzen. Es werden mindestens zwei Scanebenen 43 abgetastet. Gemäß einer vorteilhaften Ausgestaltung werden vier parallel beabstandete Scanebenen 43 orthogonal zur Fahrtrichtung 52 abgetastet.
Die von der Umfelddetektionseinheit generierten Ergebnissignale umfassen dabei die Informationen über die Entfernungen, Verteilungsdichten, Bestandskantenposition, Bestandshöhe, Bestandshöhenverlauf und/oder Bestandskantenverlauf, Bestandsdichte, Bestandsdichteverlauf, Bestandsdurchtrittstiefen und/oder dergleichen, welche im Folgenden von der Steuer- und Regeleinrichtung 33 verarbeitet und zueinander in Zusammenhang gestellt werden.

Erfindungsgemäß wird nun vorgeschlagen, dass jeder Scanebene 43 keine, eine oder mehrere Funktionselemente 30 zugeordnet sind. Indem nun jedes Funktionselement 30 ein oder mehrere Arbeitsorgane 36 der landwirtschaftlichen Arbeitsmaschine 1 umfasst, können Arbeitsabläufe automatisiert werden.

Weiter ist erfindungsgemäß ein Verfahren vorgesehen, in dem die Steuer- und Regeleinrichtung 33 basierend auf den Ergebnissignalen 50 der Scanebenen 43 die landwirtschaftliche Arbeitsmaschine 1 an der Bestandskante 41 des Erntegutbestandes 64 führt, wobei die Steuer- und Regeleinrichtung 33 auf mindestens zwei, bevorzugt alle Scanebenen 43 zugreifen kann, um die betreffenden Funktionselemente 30 frühzeitig und präzise zu steuern. Dabei wird die landwirtschaftliche Arbeitsmaschine 1 über Steuersignale 89 an die Funktionselemente 30 hydraulisches Lenksystem 80, hydraulisches Bremssystem 82 und Antriebssystem 81 über bekannte Mittel automatisch gebremst, beschleunigt und/oder gelenkt. Die Bestandskante stellt den Übergang zwischen Getreidepflanzen 68 und Stoppelfeld 69 oder Grenze 55 der agrarwirtschaftlichen Nutzfläche 54 dar.

Weiter ist erfindungsgemäß ein Verfahren vorgesehen, in dem die Steuer- und Regeleinrichtung 33 basierend auf den Ergebnissignalen 50 der Scanebenen 43 die Haspel 5 der landwirtschaftliche Arbeitsmaschine 1 an der Bestandshöhe 90 des Erntegutbestandes 64, mit anderen Worten der oberen Kante der Getreidepflanzen 68, ausrichtet, wobei das Funktionselement Haspel 5 mittels Steuersignalen 89 der Steuer- und Regeleinrichtung 33 durch bekannte Mittel automatisch höhenverstellt wird. Dabei kann die Steuer- und Regeleinrichtung 33 auf mindestens zwei, bevorzugt alle, Scanebenen 43 zugreifen, um das betreffenden Funktionselement 30 frühzeitig und präzise zu steuern.

In einem weiteren bevorzugten Verfahren wird durch Nutzung mehrerer oder sämtlicher Scanebenen 43 eine satellitengestützte Routenführung teilweise simuliert. So lassen sich im Ausführungsbeispiel beim Verfolgen einer Schwadspur, Spritzspur oder sonstigen Fahrspurmerkmalen zu jedem Zeitpunkt t aus sämtlichen vier Scanebenen 43 jeweils vier virtuelle Wegmarken vor der landwirtschaftlichen Arbeitsmaschine 1 in einer digitalen Karte generieren, welche dann von der landwirtschaftlichen Maschine 1 abgefahren werden. Als Fahrspurmerkmale sind hier Bodenmerkmale 45 zu verstehen, welche als Orientierungspunkte zur Führung der landwirtschaftlichen Arbeitsmaschine 1 dienen können. So umfassen Fahrspurmerkmale unter anderem Furchen oder Aufschüttungen, bevorzugt Spritzspuren und Schwaden.

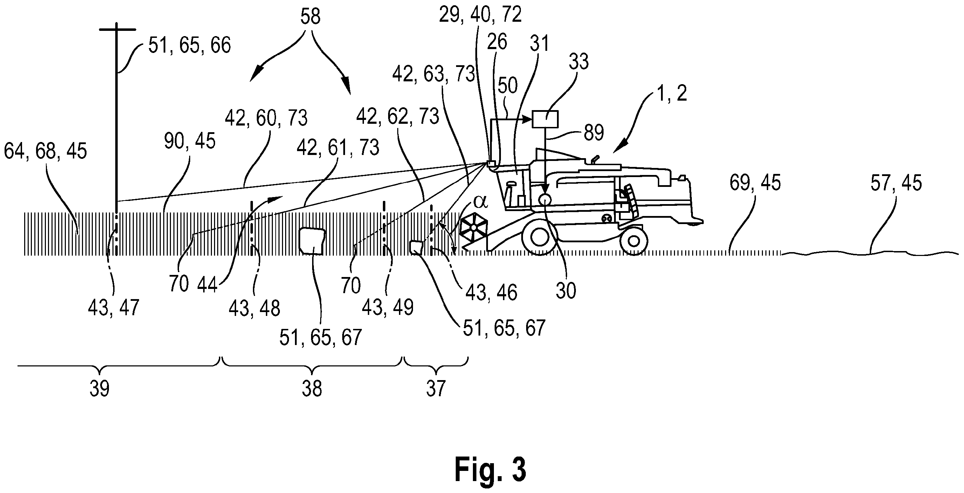

In Figur 3 ist eine landwirtschaftliche Arbeitsmaschine 1 in Form eines Mähdreschers 2 mit einen Laserscanner 40 an der Kabinendachkante 26 in Seitenansicht dargestellt, welcher den Frontbereich mit vier divergierenden Laserstrahlen 60-63 in vier beabstandeten Ebenen 46,47,48,49 abtastet. Dabei ist der Strahlverlauf der Umfelddetektionssignale 42 sichtbar gemacht. Es sind wechselnde Bodenmerkmale 45 und Hindernisse 65 dargestellt, welche die beabstandeten Scanebenen 43 durchlaufen oder durchlaufen haben. Die Scanebenen 43 werden hier schematisch als strichpunktierte Linien dargestellt. Des Weiteren ist der Bodenscanwinkel α exemplarisch für die Scanebene 63 dargestellt. Die Umfelddetektionseinrichtung 29 kann an oder in der landwirtschaftlichen Arbeitsmaschine 1 angebracht sein. Sie ist in Fahrtrichtung 52 und zum Boden geneigt ausgerichtet. Bevorzugt befindet sich die Umfelddetektionseinrichtung 29 mittig zur linken und rechten Seite der landwirtschaftlichen Arbeitsmaschine 1 an einem erhöhten Punkt, bevorzugt außen am Kabinendach 59 oder in der Fahrzeugkabine 31, bevorzugt an der vorderen Kabinendachkante 26. Die erhöhte Position führt zu einem einstellbaren steileren Bodenscanwinkel α zwischen den Umfelddetektionssignalen 42 und dem Erdboden 57, dem Objekt 51, dem Hindernis 65 und/oder dem Bodenmerkmal 45.
Die unterschiedlichen Bodenscanwinkel α der vier Laserstrahlen 60-63 bedingen die Erfassung von unterschiedlich hohen Bodenmerkmalen 45, Hindernissen 65 und/oder Objekten 51. Dabei dringt der Laserstrahl 63 mit dem größten Bodenscanwinkel a, welches der Scanebenen 43 im Nahbereich entspricht, am tiefsten in den Erntegutbestand 64 ein und detektiert auch Bodenmerkmale 45, Hindernisse 65 und/oder Objekte 51 weit unterhalb der Bestandshöhe 90. Für die Detektion von die Bestandshöhe 90 überragenden Bodenmerkmalen 45, Hindernissen 65 und/oder Objekten 51 werden Laserstrahlen 60,61 mit kleineren Bodenscanwinkel α und hohen Strahlreichweiten genutzt, das heißt Scanebenen 43 aus dem Fernbereich 39 und/oder Mittelbereich 38. Somit liegen zu jedem Zeitpunkt t Umfeldinformationen aus verschieden Entfernungsbereichen 37,38,39 und/oder Bestandsdurchtrittstiefen 70 der Laserstrahlen 73 gleichzeitig vor.

Erfindungsgemäß ist ein Verfahren vorgesehen, in dem die Steuer- und Regeleinrichtung 33 durch die Ergebnissignale 50 der nahe beabstandeten Scanebene 46 eine kurzfristige präzise Steuerung bewirkt und durch die Ergebnissignale 50 aus den fern beabstandeten Scanebene 47 eine frühzeitige grobe Vorabsteuerung der Funktionselemente 30 bewirkt. Dies erfolgt durch Lenk- und/oder Steuersignale 89 von der Steuer- und Regeleinrichtung 33 an die Funktionselemente 30. Beispielsweise kann die Haspel 5 bereits vor Erreichen eines Sprungs der Bestandshöhe 90 in den passenden Grenzbereich des optimalen Höhenbereichs bewegt werden, wodurch die erforderliche Höhenanpassung bei Erreichen des Bestandshöhensprungs geringer ausfällt.

Weiter ist erfindungsgemäß ein Verfahren vorgesehen, in dem die Steuer- und Regeleinrichtung 33 mittels der Ergebnissignale 50 der Scanebenen 43 eine Kollision mit Hindernissen 65 verhindert, wobei die landwirtschaftliche Arbeitsmaschine 1 durch Übermittlung von Steuersignalen 89 an die Funktionselemente 30 über bekannte Mittel automatisch gebremst, umgelenkt und/ oder das Schneidwerk 3 ausgelenkt wird. Dabei kann die Steuer- und Regeleinrichtung 33 auf mindestens zwei, bevorzugt alle, Scanebenen 43 zugreifen.
Als Hindernisse 65 sind hier starre und bewegliche Bodenmerkmale 45 und Objekte 51 zu verstehen, welche die landwirtschaftliche Arbeitsmaschine 1 beschädigen oder zu einer Verschmutzung des abgeernteten Erntegutes führen könnten. Dies impliziert Bäume, Baumstämme, Felsen, Steine, Gebäude, hervorstehende Kanalisationsschächte, Tiere oder dergleichen.
In einer besonders bevorzugten Ausgestaltung der Erfindung werden die Ergebnissignale 50 der Scanebene 47 des Fernbereichs 39 zur Erfassung von großen Hindernissen 66 von die Steuer- und Regeleinrichtung 33 ausgewertet, welche in Abhängigkeit von der Geschwindigkeit der landwirtschaftliche Arbeitsmaschine 1 ein Umfahren des großen Hindernisses 66 noch zulässt. Die Steuer- und Regeleinrichtung 33 steuert dazu mittels Lenk- und/oder Steuersignale 89 die Funktionselemente 30 hydraulisches Lenksystem 80, hydraulisches Bremssystem 82 und Antriebssystem 81 und lenkt die landwirtschaftliche Arbeitsmaschine 1 rechtzeitig um das große Hindernis 66 herum. Als große Hindernisse 66 sind hier generell voluminöse und/oder hohe Hindernisse 65 zu verstehen, so z.B. Häuser, Telegraphen- und Telefonmasten oder Bäume, die die Bestandshöhe vorzugsweise überragen.
Für kleine Hindernisse 67 werden bevorzugt die Ergebnissignale 50 der nahe beabstandete Scanebene 46 von der Steuer- und Regeleinrichtung 33 ausgewertet, deren Lenk- und/oder Steuersignale 89 in Abhängigkeit von der Hindernishöhe entweder zur Hebung des Funktionselements 30 Schneidwerks 3 oder zum sofortigen Stopp der landwirtschaftlichen Arbeitsmaschine 1 durch die Funktionselemente 30 hydraulische Bremssystem 82 und Antriebssystem 81 führt. Als kleine Hindernisse 67 sind hier unter anderem Steine, Tiere, liegende Baumstämme oder hervorstehende Kanalisationsverschlüsse zu verstehen, welche sich unterhalb der Bestandshöhe 90 befinden oder nicht durch vorherige Scans sicher erfasst werden konnten.
Die Ergebnissignale 50 der Scanebenen 48,49 im Mittelbereich 38 können von der Regel- und Steuereinrichtung 33 bei Bedarf für beide Szenarien hinzugezogen werden.

Weiter ist erfindungsgemäß ein Verfahren vorgesehen, in dem die Steuer- und Regeleinrichtung 33 mittels der Ergebnissignale 50 der Scanebenen 43 eine Spur zur Fahrzeugführung identifizieren kann und die landwirtschaftliche Arbeitsmaschine 1 mittels Weiterleitung von Lenk- und/oder Steuersignalen 89 an die Funktionselemente 30 automatisch in/an dieser Spur führen kann. Dabei kann die Steuer- und Regeleinrichtung 33 auf Daten mindestens zweier, bevorzugt aller, Scanebenen 43 zugreifen, um die landwirtschaftliche Arbeitsmaschine 1 frühzeitig und präzise durch Regelung der Funktionselemente 30 hydraulischen Lenksystems 80, des Antriebssystems 81 und/oder des hydraulischen Bremssystems 82 an/in der Spur zu führen. Zur Identifizierung der Spur können beliebige Fahrspurmerkmale verwendet werden. Als Fahrspurmerkmale sind hier Bodenmerkmale 45 zu verstehen, welche als Orientierungspunkte zur Führung der landwirtschaftlichen Arbeitsmaschine 1 dienen können. So umfassen Fahrspurmerkmale unter anderem Furchen oder Aufschüttungen, bevorzugt Spritzspuren und Schwaden.

Weiter ist erfindungsgemäß ein Verfahren vorgesehen, in dem die Steuer- und Regeleinrichtung 33 durch Ergebnissignale 50 der Scanebenen 43 die Bestandshöhe berechnen kann und Funktionselemente 30 des Schneidwerks 3 mittels Lenk- und/oder Steuersignale 89 automatisch anpasst. Dabei kann die Steuer- und Regeleinrichtung 33 auf Daten aller Scanebenen 43, bevorzugt jedoch der nah beabstandeten Scanebenen 43 zugreifen, um die Haspel 5 und das Messerbalken 4 frühzeitig und/oder präzise durch Steuerung der Hebehydrauliken an die Bestandshöhe anzupassen.

Weiter ist erfindungsgemäß ein Verfahren vorgesehen, in dem die Steuer- und Regeleinrichtung 33 durch die Ergebnissignale 50 der Scanebenen 43 den zu erwartenden Erntegutdurchsatz berechnen kann und Funktionselemente 30 dem zu erwartenden Erntegutdurchsatz mittels Lenk- und/oder Steuersignale 89 automatisch anpasst. Dabei kann die Steuer- und Regeleinrichtung 33 auf Daten mehrere, bevorzugt der nah beabstandeten, Scanebenen 43 zugreifen, um die landwirtschaftliche Arbeitsmaschine 1 frühzeitig und präzise durch Regelung der Leistung der Funktionselemente 30 Antriebssystem 81, Schrägförderer 7, Dresch- oder Häckselwerk 12, Trenneinheit 15 und/oder Reinigungseinheit 22 automatisch anzupassen. Es sei hier exemplarisch die Steuerung des Schrägfördererantriebs, des Dreschtrommelantriebs und des Schüttlerantriebs erwähnt.

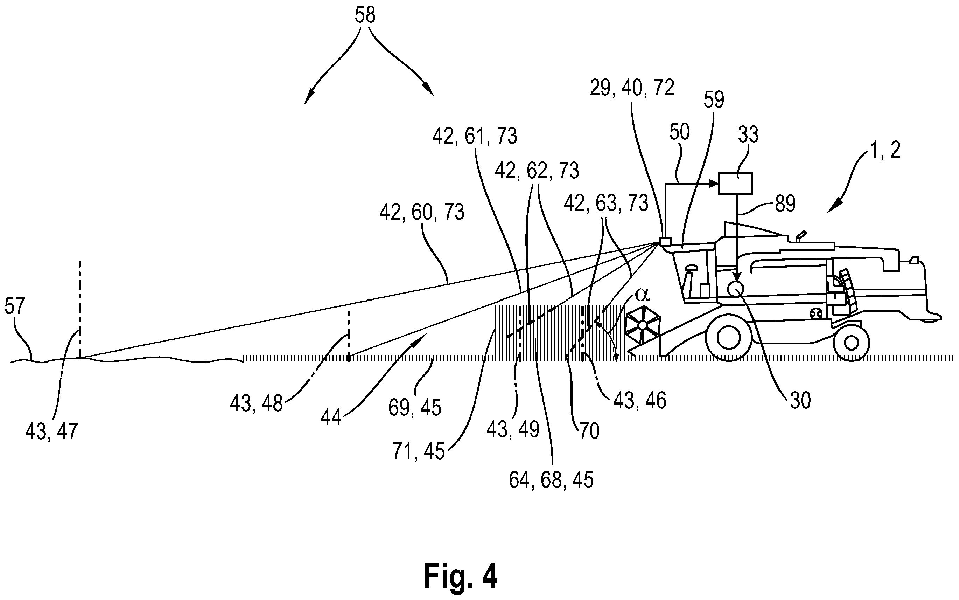

In Figur 4 ist eine landwirtschaftliche Arbeitsmaschine 1 in Form eines Mähdreschers 2 mit einen Laserscanner 40 auf dem Kabinendach 59 in Seitenansicht und in analoger Weise zu Figur 3 dargestellt. Abweichend ist hier jedoch die Feldendeerkennung dargestellt. Das Feldende 71 durchläuft dabei einen Teil der beabstandeten Scanebenen 43. Die Scanebenen 43 werden hier schematisch als strichpunktierte Linien dargestellt. In einem erfindungsgemäßen Verfahren ist vorgesehen, dass die Steuer- und Regeleinrichtung 33 mittels der Ergebnissignale 50 der Scanebenen 43 das Feldende 71 automatisch identifizieren kann und die landwirtschaftliche Arbeitsmaschine 1 über Lenk- und/oder Steuersignale 89 an die Funktionselementen 30 automatisch aus der Spur, und ggfs. in die nächste Spur geführt und/oder das Schneidwerk 3 ausgelenkt werden kann. Dabei kann die Steuer- und Regeleinrichtung 33 auf Daten mindestens zweier, im aufgeführten Beispiel der Scanebenen 47 und 48, bevorzugt aller Scanebenen 43 zugreifen, um die landwirtschaftliche Arbeitsmaschine 1 frühzeitig und präzise mittels Steuerung der Funktionselemente 30 hydraulisches Lenksystem 80, Antriebssystem 81 und hydraulisches Bremssystem 82 aus und in eine Spur zu lenken. Zudem wird das Schneidwerk 3 bei Feldende 71 über eine Hebehydraulik automatisch in eine erhöhte Sicherheitsposition gefahren werden und bei Beginn der nächsten Spur wieder in die Arbeitsposition abgesenkt werden. Unter Feldende 71 ist dabei ein in Fahrtrichtung befindlicher Übergang vom Erntegutbestand 64 zum Stoppelfeld 69, Rand des Feldes, Ende des Schwades, oder sonstige Bodenmerkmals- oder Objektänderung zu verstehen, welche eine nicht hindernisbedingte Richtungsänderung zur Fortsetzung der Ernte erfordert. Die Spur kann eine Spritzspur, Schwadspur, Bestandskantenführungsspur oder der gleichen darstellen.

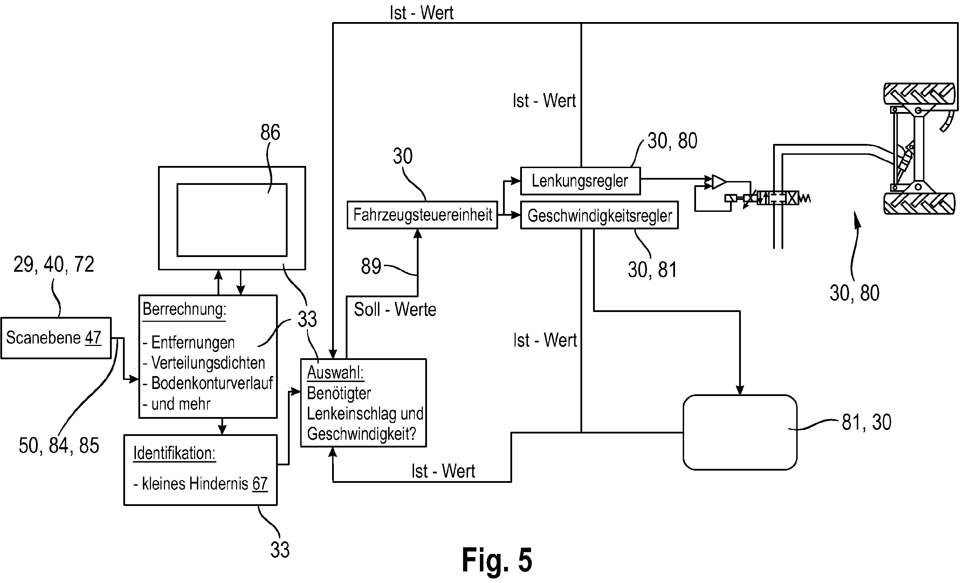

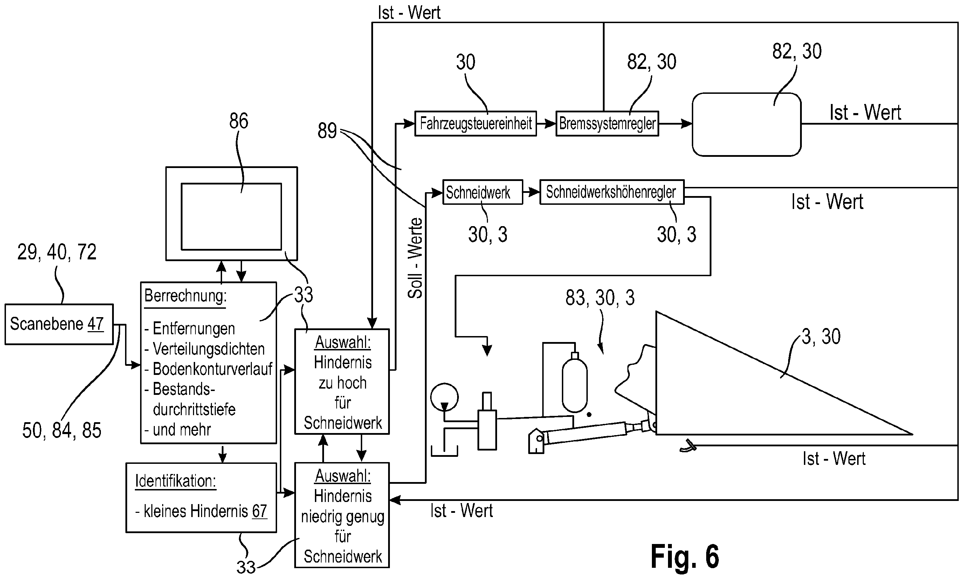

Die Steuerung und Regelung der Funktionselemente 30 sowie eine mögliche Zuordnung der Scanebenen 43 zu den Funktionselementen 30 wird exemplarisch im Detail für den Fall der Hinderniserkennung in den Ausführungsbeispielen in Figur 5 und Figur 6 gezeigt. Es liegt im Rahmen der Erfindung, dass für andere Einsatzzwecke, respektive Gegebenheiten, wie zum Beispiel eine Fahrspurführung, eine Bestandskantenführung, Schwadlenkung, Feldendeautomatisierung, Objektverfolgung eine angepasste Regelung vorliegt.

In Figur 5 sind exemplarisch die Mittel zur automatischen Steuerung eines Mähdreschers 2 im Falle eines großen Hindernisses 66, so z.B. den Bestand überragende Bäume oder Telegraphenmasten, durch Regelungen von Funktionselementen 30 mittels der Ergebnissignale 50 der Scanebenen 43 im Fernbereich 39 dargestellt. Die Umfelddetektionseinrichtung 29 übermittelt Ergebnissignale 50, welche Entfernungsinformationen 84 und/oder die Verteilungsdichteinformationen 85 aus den Umfelddetektionssignalen 42 der Scanebenen 43 enthalten, an eine der landwirtschaftlichen Arbeitsmaschine 1 zugeordneten Steuer- und Regeleinrichtung 33. Im dargestellten Beispiel werden die Ergebnissignale 50 von der Scanebene 47 aus dem Fernbereich 39 an die Steuer- und Regeleinrichtung 33 übermittelt. Die Steuer- und Regeleinrichtung 33 berechnet die Entfernungen, die Verteilungsdichten, den Bodenkonturverlauf 87 und den Bestandsdichteverlauf 88 aus den Ergebnissignale 50 der Umfelddetektionseinrichtung 29 und identifiziert mittels eines Algorithmus die Bodenmerkmale 45, Hindernisse 65 und Objekte 51. Nach Identifizierung eines großen Hindernisses 66 und Bestimmung dessen Breite durch die Steuer- und Regeleinrichtung 33 und Einberechnung der Ist-Werte der Fahrzeuggeschwindigkeit, der Radeinschlagwinkels und der Nähe zum Hindernis mittels eines implementierten Regelalgorithmus wird der erforderliche Radeinschlagswinkel und die erforderliche Geschwindigkeit berechnet, ein Lenkmanöver bestimmt und Lenk- und/oder Steuersignale 89 an die Funktionselemente 30 hydraulisches Lenksystem 80 und Antriebssystem 81 gesandt, genauer den Lenkungsregler und den Geschwindigkeitsregler, welche die mechanischen Komponenten der Funktionselemente 30 entsprechend eines implementierten Regelalgorithmus ansteuern. Der Geschwindigkeitsregler des hydrostatischen Antriebes des Antriebssystems 81 reduziert die Pumpleistung der Hydraulikpumpe, wodurch die Hydromotoren mit einer geringeren Drehzahl arbeiten. Als Konsequenz wird die landwirtschaftliche Arbeitsmaschine 1 verlangsamt. Der Lenkungsregler im hydraulischen Lenksystem 80 öffnet die Ventile in der Steuerpumpe, wodurch die Menge an, dem Lenkzylinder zugeführtem, ÖI erhöht und der Radeinschlagswinkel geändert wird. Als Konsequenz führt die landwirtschaftliche Arbeitsmaschine 1 ein zuvor bestimmtes Lenkmanöver aus. Dabei wird das bestimmte Lenkmanöver kontinuierlich anhand der Ergebnissignale 50 der Umfelddetektionseinrichtung 29 und dessen Scanebenen 43 angepasst. Nach Umfahrung des großen Hindernisses 66 wird die vorherige Fahrspur und der Ernteprozess automatisch wieder aufgenommen.

Durch Speicherung und/oder Überlagerung der Entfernungsinformationen 84 und/oder der Verteilungsdichteinformationen 85 kann die Steuer- und Regeleinrichtung 33 den Bodenkonturverlaufs 87 und/oder die Bestandsdichteverlauf 88 berechnen und digitale Karten 86 der agrarwirtschaftlichen Nutzfläche 54 erstellen.

Die Steuer- und Regeleinrichtung 33 kann in Form eines Computers ausgeführt sein und folgende Elemente beinhalteten: Computer oder eine andere Auswerteeinheit, Eingabeeinheiten (z.B. ein Touchscreen, Knöpfte, Schalter, und/oder Drehknöpfe), Anzeigeeinheiten 32 (Display), Datenkommunikationsnetz (z.B. ein CAN-BUS), Programme, Steuer- und Regelmodule (z.B. direkt verbunden mit den Funktionselementen 30).

In Figur 6 sind exemplarisch die Mittel zur automatischen Steuerung eines Mähdreschers 2 im Falle eines kleinen Hindernisses 67, so z.B. hervorstehende Kanalisationsdeckel oder einem Stein, durch Regelungen von Funktionselementen 30 mittels der Ergebnissignale 50 der Scanebenen 43 im Nahbereich 37 dargestellt. Die Steuer- und Regeleinrichtung 33 empfängt die Ergebnissignale 50 der am nächsten beabstandeten Scanebene 46, berechnet die Entfernungen, Verteilungsdichten, Bodenkonturverlauf 87 und Bestandsdichteverlauf 88 und identifiziert mithilfe eines Algorithmus das Objekt 51 als nahes und kleines Hindernis 67. Anhand eines implementierten Regelalgorithmus, welcher Fahrzeuggeschwindigkeit, Höhe des Hindernisses, Schneidwerkshöhe und/oder die Nähe zum Hindernis berücksichtigt, und anhand den Ist-Werten der Schneidwerkshöhe und der Fahrzeuggeschwindigkeit trifft die Steuer- und Regeleinrichtung 33 die Auswahl zwischen Not-Stopp oder Schneidwerksanhebung und sendet die Sollwerte mittels Lenk- und/oder Steuersignale 89 an die Funktionselemente 30 hydraulisches Bremssystem 82 und/oder Schneidwerk 3. So führt die Wahl des Not-Stopps insbesondere zur Ansteuerung des Reglers des hydraulischen Bremssystems 82, welcher das Betriebsbremsventil öffnet und den Druck auf die Bremskolben erhöht. Das Fahrzeug wird gebremst. Die Wahl der Schneidwerksanhebung führt insbesondere zur Ansteuerung des Reglers des Funktionselements 30 Schneidwerkshebehydraulik 83, welcher ein Hydraulikventil öffnet und die Hydraulikzylinder mit Hydrauliköl füllt. Als Konsequenz wird das Schneidwerk 3 in eine Sicherheitshöhe, aus der Reichweite des kleinen Hindernisses, gehoben.

Die Darstellungen in den Ausführungsbeispielen sind nicht erschöpfend, sondern lediglich exemplarisch. Entsprechendes gilt für landwirtschaftliche Arbeitsmaschinen mit anderen Antrieben, Lenkungssystemen und Verstellmechanismen der Funktionselemente. Insbesondere kann eine Aktion, wie z.B. das Ausweichen von einem großen Hindernis, durch andere oder zusätzliche Funktionselemente als in den Ausführungsbeispielen erwähnt, durchgeführt werden.

**Bezugszeichenliste:**

| | | | |
|---|---|---|---|
| 1 | Landwirtschaftliche Arbeitsmaschine | 31 | Fahrzeugkabine |
| 2 | Mähdrescher | 32 | Anzeigeeinheit |
| 3 | Schneidwerk | 33 | Steuer- und Regeleinrichtung |
| 4 | Messerbalken | 34 | Bediener |
| 5 | Haspel | 35 | Bussystem |
| 6 | Einzugsschnecke | 36 | Arbeitsorgan |
| 7 | Schrägförderer | 37 | Nahbereich |
| 8 | Erntegutstrom | 38 | Mittelbereich |
| 9 | Dreschkorb | 39 | Fernbereich |
| 10 | Beschleunigungstrommel | 40 | Laserscanner |
| 11 | Dreschtrommel | 41 | Bestandskante |
| 12 | Dreschwerk | 42 | Umfelddetektionssignale |
| 13 | Umlenktrommel | 43 | Scanebenen |
| 14 | Hordenschüttler | 44 | Bereichsweise erfasstes Umfeld |
| 15 | Trenneinheit | 45 | Bodenmerkmal |
| 16 | Körner | 46 | Scanebene 4 |
| 17 | Rücklaufboden | 47 | Scanebene 1 |
| 18 | Vorbereitungsboden | 48 | Scanebene 2 |
| 19 | Siebebene | 49 | Scanebene 3 |
| 20 | Siebebene | 50 | Ergebnissignale |
| 21 | Gebläse | 51 | Objekt |
| 22 | Reinigungseinheit | 52 | Fahrtrichtung |
| 23 | Kornschnecke | 53 | Dreiseitige Teilfläche |
| 24 | Elevator | 54 | Agrarwirtschaftliche Nutzfläche |
| 25 | Korntank | 55 | Grenze |
| 26 | Kabinendachkante | 56 | Angrenzende Fläche |
| 27 | Korntankentleerungsrohr | 57 | Erdboden |
| 28 | Anbau | 58 | Umfeld |
| 29 | Umfelddetektionseinrichtung | 59 | Kabinendach |
| 30 | Funktionselemente | 60 | Laserstrahl der Scanebene 1 |
| 61 | Laserstrahl der Scanebene 2 | | |
| 62 | Laserstrahl der Scanebene 3 | | |
| 63 | Laserstrahl der Scanebene 4 | | |
| 64 | Erntegutbestand | | |
| 65 | Hindernis | | |
| 66 | Großes Hindernis | | |
| 67 | Kleines Hindernis | | |
| 68 | Getreidepflanzen | | |
| 69 | Stoppelfeld | | |
| 70 | Bestandsdurchtrittstiefe | | |
| 71 | Feldende | | |
| 72 | Scanner | | |
| 73 | Laserstrahl | | |
| 74 | Sensorsystem im Funktionselement | | |
| 80 | Hydraulisches Lenksystem | | |
| 81 | Antriebssystem | | |
| 82 | Hydraulisches Bremssystem | | |
| 83 | Schneidwerkshebehydraulik | | |
| 84 | Entfernungsinformationen | | |
| 85 | Verteilungsdichteinformationen | | |
| 86 | Digitale Karte | | |
| 89 | Lenk- und/oder Steuersignal | | |
| 90 | Bestandshöhe | | |
| α | Bodenscanwinkel | | |
| β | Scanneröffnungswinkel | | |

## Patentansprüche

1. Landwirtschaftliche Arbeitsmaschine (1) eine Umfelddetektionseinrichtung (29) zur bereichsweisen Erfassung eines Umfeldes (44) und ein oder mehrere steuerbare Funktionselemente (30) umfassend, wobei die Umfelddetektionseinrichtung (29) Umfelddetektionssignale (42) generiert, die in einer der landwirtschaftlichen Arbeitsmaschine (1) zugeordneten Steuer- und Regeleinrichtung (33) verarbeitbar sind,
wobei die Umfelddetektionseinrichtung (29) als Scanner (72) ausgebildet ist, der das Umfeld (58) in Scanebenen (43) abtastet und wobei jeder Scanebene (43) die Steuerung von Funktionselementen (30) zugeordnet ist
**dadurch gekennzeichnet,**
**dass** die Umfelddetektionseinrichtung (29) das bereichsweise erfasste Umfeld (44) in vier Scanebenen (43) abtastet und wobei das von der Umfelddetektionseinrichtung (29) bereichsweise erfasste Umfeld (44) einen Nah- (37), Mittel- (38) und Fernbereich (39) umfasst und jedem Bereich keine, eine oder mehr Scanebenen (43) zugeordnet sind.

2. Landwirtschaftliche Arbeitsmaschine (1) eine Umfelddetektionseinrichtung (29) umfassend nach Anspruch 1,
**dadurch gekennzeichnet,**
**dass** die Umfelddetektionssignale (42) elektromagnetische Wellen, bevorzugt Laserstrahlen (73), sind.

3. Landwirtschaftliche Arbeitsmaschine (1) eine Umfelddetektionseinrichtung (29) umfassend nach Anspruch 1,
**dadurch gekennzeichnet,**
**dass** die Umfelddetektionseinrichtung (29) als Scanner (72) ausgebildet ist, der Umfelddetektionssignale (42) zur Abtastung aussendet, die reflektierten Umfelddetektionssignale (42) wieder empfängt und daraus ein Ergebnissignal (50) generiert.

4. Landwirtschaftliche Arbeitsmaschine (1) eine Umfelddetektionseinrichtung (29) umfassend nach einem der vorhergehenden Ansprüche,
**dadurch gekennzeichnet,**
**dass** das Umfeld (58) aus einem in Fahrtrichtung (52) und in Reichweite des Umfelddetektionssignals (42) befindlichen Teil der agrarwirtschaftlichen Nutzfläche (54) gebildet wird.

5. Landwirtschaftliche Arbeitsmaschine (1) eine Umfelddetektionseinrichtung (29) umfassend nach Anspruch 4,
**dadurch gekennzeichnet,**
**dass** die seitliche Ausdehnung des Umfeldes (58) die Breite der landwirtschaftlichen Arbeitsmaschine (1) zumindest teilweise überragt, wobei die Breite der landwirtschaftlichen Arbeitsmaschine (1) Anbauten (28) an diese beinhalten kann.

6. Landwirtschaftliche Arbeitsmaschine (1) eine Umfelddetektionseinrichtung (29) umfassend nach einem der vorhergehenden Ansprüche,
**dadurch gekennzeichnet,**
**dass** die Steuer- und Regeleinrichtung (33) aus der Pulslaufzeit des reflektierten Umfelddetektionssignals (42) eine Entfernung und/oder eine Verteilungsdichte errechnet.

7. Landwirtschaftliche Arbeitsmaschine (1) eine Umfelddetektionseinrichtung (29) umfassend nach einem der vorhergehenden Ansprüche,
**dadurch gekennzeichnet,**
**dass** die Steuer- und Regeleinrichtung (33) aus den errechneten Entfernungen und/oder Verteilungsdichten eine Bodenkontur und/oder einen Bestandsdichteverlauf berechnet und/oder die agrarwirtschaftliche Nutzfläche (54) digital kartiert.

8. Landwirtschaftliche Arbeitsmaschine (1) eine Umfelddetektionseinrichtung (29) umfassend nach einem der vorhergehenden Ansprüche,
**dadurch gekennzeichnet,**
**dass** das Funktionselement (30) ein oder mehrere Arbeitsorgane (36) einer landwirtschaftlichen Arbeitsmaschine (1), bevorzugt einer selbstfahrenden Erntemaschine, bevorzugt eines Mähdrescher (2), und/ oder ein die landwirtschaftliche Arbeitsmaschine (1) begleitendes Transportfahrzeug umfasst.

9. Landwirtschaftliche Arbeitsmaschine (1) eine Umfelddetektionseinrichtung (29) umfassend nach einem der vorhergehenden Ansprüche,
**dadurch gekennzeichnet,**
**dass** einer, mehreren oder sämtlichen Scanebenen (43) die Steuerung von einem, mehreren oder sämtlichen Funktionselementen (30) zugeordnet ist.

10. Landwirtschaftliche Arbeitsmaschine (1) eine Umfelddetektionseinrichtung (29) umfassend nach Anspruch 9,
**dadurch gekennzeichnet,**
**dass** eine kurzfristige präzise Steuerung der Funktionselemente (30) durch Auswertung der im Nahbereich (37) liegenden Scanebenen (43) erfolgt und eine frühzeitige grobe Steuerung der Funktionselemente (30) durch Auswertung einer oder mehrerer im Mittel- (38) und/oder Fernbereich (39) liegenden Scanebenen (43) erfolgt.

11. Landwirtschaftliche Arbeitsmaschine (1) eine Umfelddetektionseinrichtung (29) umfassend nach einem der Ansprüche 1 bis 10,
**dadurch gekennzeichnet,**
**dass** die Umfelddetektionseinrichtung (29) durch Auswertung eines Umfelddetektionssignals (42) einer der mehreren oder mehrerer Scanebenen (43) ein Ergebnissignal (50) generiert, dass die Position eines Hindernisses (65) im Umfeld (58) umfasst und dass das Ergebnissignal (50) an die Steuer- und Regeleineinheit (33) übergibt und die Steuer- und Regeleinrichtung (33) aus diesem Ergebnissignal (50) Lenk- und/oder Steuersignale für ein oder mehrere Funktionselemente (30) der landwirtschaftlichen Arbeitsmaschine (1) generiert.

12. Landwirtschaftliche Arbeitsmaschine (1) eine Umfelddetektionseinrichtung (29) umfassend nach Anspruch 11,
**dadurch gekennzeichnet,**
**dass** die Funktionselemente (30) das hydraulische Lenksystem (80), das Antriebssystem (81), das hydraulisches Bremssystem (81) und/oder das Schneidwerk (3) beinhalten.

13. Landwirtschaftliche Arbeitsmaschine (1) eine Umfelddetektionseinrichtung (29) umfassend nach Anspruch 11,
**dadurch gekennzeichnet,**
**dass** die Detektion niedriger und/oder kleiner Hindernisse (67) durch Auswertung der im Nahbereich (37) liegenden Scanebenen (43) erfolgt und die Detektion hoher und/oder voluminöser Hindernisse (66) durch Auswertung einer oder mehrerer im Mittel- (38) und/oder Fernbereich (39) liegenden Scanebenen (43) erfolgt.

14. Landwirtschaftliche Arbeitsmaschine (1) eine Umfelddetektionseinrichtung (29) umfassend nach einem der Ansprüche 1 bis 10,
**dadurch gekennzeichnet,**
**dass** die Umfelddetektionseinrichtung (29) durch Auswertung eines Umfelddetektionssignals (42) einer oder mehrerer Scanebenen (43) ein Ergebnissignal (50) generiert, dass die Bestandskantenposition, die Bestandshöhe (90), den Bestandshöhenverlauf und/oder den Bestandskantenverlauf im Umfeld (58) umfasst und welches an die Steuer- und Regeleineinheit (33) übergeben wird, die aus diesem Ergebnissignal (50) Lenk- und/oder Steuersignale für ein oder mehrere Funktionselemente (30) der landwirtschaftlichen Arbeitsmaschine (1), welche das hydraulische Lenksystem (80) und/ oder die Haspel (5) beinhalten, generiert.

15. Landwirtschaftliche Arbeitsmaschine (1) eine Umfelddetektionseinrichtung (29) umfassend nach einem der Ansprüche 1 bis 10,
**dadurch gekennzeichnet,**
**dass** die Umfelddetektionseinrichtung (29) durch Auswertung eines Umfelddetektionssignals (42) einer oder mehrerer Scanebenen (43) ein Ergebnissignal (50) generiert, dass das Feldende (71) im Umfeld (58) umfasst und das an die Steuer- und Regeleineinheit (33) übergeben wird, welche aus diesem Ergebnissignal (50) Lenk- und/oder Steuersignale für ein oder mehrere Funktionselemente (30) der landwirtschaftlichen Arbeitsmaschine (1), welche das hydraulische Lenksystem (80), das hydraulische Bremssystem (82), das Antriebssystem (81) und/oder das Schneidwerk (3) beinhalten, generiert.

## Claims

1. An agricultural working machine (1) comprising an environment detecting device (29) for surveying regions of an environment (44) and one or more controllable functional elements (30), wherein the environment detecting device (29) generates environment detecting signals (42) which can be processed in a controlling and regulating device (33) associated with the agricultural working machine (1),
wherein the environment detecting device (29) is configured as a scanner (72) which scans the environment (58) in scanning planes (43) and wherein the control of functional elements (30) is associated with each scanning plane (43),
**characterized in that**
the environment detecting device (29) scans the region-wise surveyed environment (44) in four scanning planes (43) and wherein the environment (44) surveyed in regions by the environment detecting device (29) comprises a close range (37), a medium range (38), and remote range (39) and zero, one or more scanning planes (43) are associated with each region.

2. The agricultural working machine (1) comprising an environment detecting device (29) according to claim 1,
**characterized in that**
the environment detecting signals (42) are electromagnetic waves, preferably laser beams (73).

3. The agricultural working machine (1) comprising an environment detecting device (29) according to claim 1,
**characterized in that**
the environment detecting device (29) is configured as a scanner (72) which emits environment detecting signals (42) for the purposes of scanning, receives the environment detecting signals (42) reflected back and generates a results signal (50) therefrom.

4. The agricultural working machine (1) comprising an environment detecting device (29) according to one of the preceding claims,
**characterized in that**
the environment (58) is formed by a part of the agricultural farmland found in the direction of travel (52) and within the range of the environment detecting signal (42).

5. The agricultural working machine (1) comprising an environment detecting device (29) according to claim 4,
**characterized in that**
the lateral extent of the environment (58) extends beyond the width of the agricultural working machine (1) at least in part, wherein the width of the agricultural working machine (1) may include extensions (28) thereof.

6. The agricultural working machine (1) comprising an environment detecting device (29) according to one of the preceding claims,
**characterized in that**
the controlling and regulating device (33) calculates a distance and/or a distribution density from the time of flight of the reflected environment detecting signal (42).

7. The agricultural working machine (1) comprising an environment detecting device (29) according to one of the preceding claims,
**characterized in that**
the controlling and regulating device (33) calculates a ground contour and/or a crop density profile from the calculated distances and/or distribution densities and/or digitally maps the agricultural farmland (54).

8. The agricultural working machine (1) comprising an environment detecting device (29) according to one of the preceding claims,
**characterized in that**
the functional element (30) comprises one or more working means (36) of an agricultural working machine (1), preferably a self-propelled harvesting machine, preferably a combine harvester (2), and/or a transport vehicle accompanying the agricultural working machine (1).

9. The agricultural working machine (1) comprising an environment detecting device (29) according to one of the preceding claims,
**characterized in that**
the control of one, a plurality of or all of the functional elements (30) is associated with one, a plurality of or all of the scanning planes (43).

10. The agricultural working machine (1) comprising an environment detecting device (29) according to claim 9,
**characterized in that**
a short term precise control of the functional elements (30) is carried out by analysing the scanning planes (43) located in the close range (37) and an early coarse control of the functional elements is carried out by evaluation of one or more scanning planes (43) located in the medium range (38) and/or remote range (39).

11. The agricultural working machine (1) comprising an environment detecting device (29) according to one of claims 1 to 10,
**characterized in that**
the environment detecting device (29) generates a results signal (50) by analysing an environment detecting signal (42) from one or more scanning planes (43) which comprises the position of an obstacle (65) in the environment (58) and which transfers the results signal (50) to the controlling and regulating device (33) and the controlling and regulating device (33) generates steering and/or control signals for one or more functional elements (30) of the agricultural working machine (1) from this results signal (50).

12. The agricultural working machine (1) comprising an environment detecting device (29) according to claim 11,
**characterized in that**
the functional elements (30) include the hydraulic steering system (80), the drive system (81), the hydraulic brake system (81) and/or the cutting assembly (3).

13. The agricultural working machine (1) comprising an environment detecting device (29) according to claim 11,
**characterized in that**
the detection of low and/or small obstacles (67) is carried out by analysing the scanning planes (43) located in the close range (37) and the detection of high and/or bulky obstacles (66) is carried out by analysing one or more scanning planes (43) located in the medium range (38) and/or remote range (39).

14. The agricultural working machine (1) comprising an environment detecting device (29) according to one of claims 1 to 10,
**characterized in that**
the environment detecting device (29) generates a results signal (50) by analysing an environment detecting signal (42) from one or more scanning planes (43), the results signal comprising the crop edge position, the crop height (90), the crop height profile and/or the crop edge profile in the environment (58) and which is transmitted to the controlling and regulating device (33), which generates steering and/or control signals from this results signal (50) for one or more functional elements (30) of the agricultural working machine (1) which includes the hydraulic steering system (80) and/or the reel (5).

15. The agricultural working machine (1) comprising an environment detecting device (29) according to one of claims 1 to 10,
**characterized in that**
the environment detecting device (29) generates a results signal (50) by analysing an environment detecting signal (42) from one or more scanning planes (43), the results signal comprising the field end (71) in the environment (58) and which is transmitted to the controlling and regulating device (33), which generates steering and/or control signals from said results signal (50) for one or more functional elements (30) of the agricultural working machine (1) which includes the hydraulic steering system (80), the hydraulic brake system (82), the drive system (81) and/or the cutting assembly (3).

## Revendications

1. Machine de travail agricole (1) incluant un équipement de détection d'environnement (29) pour analyser par zones un environnement (44), et un ou plusieurs éléments fonctionnels commandables (30), l'équipement de détection d'environnement (29) générant des signaux de détection d'environnement (42) qui sont traitables dans un équipement de commande et de réglage (33) associé à la machine de travail agricole (1), l'équipement de détection d'environnement (29) étant conformé en scanner (72) qui palpe l'environnement (58) dans des plans de scannage (43), et à chaque plan de scannage (43) étant associée la commande d'éléments fonctionnels (30), **caractérisée en ce que** l'équipement de détection d'environnement (29) palpe l'environnement (44) analysé par zones en quatre plans de scannage (43), et l'environnement (44) analysé par zones par l'équipement de détection d'environnement (29) inclut des zones proche (37), médiane (38) et lointaine (39), et à chaque zone étant associés aucun, un ou plusieurs plans de scannage (43).

2. Machine de travail agricole (1) incluant un équipement de détection d'environnement (29) selon la revendication 1, **caractérisée en ce que** les signaux de détection d'environnement (42) sont des ondes électromagnétiques, préférentiellement des faisceaux laser (73).

3. Machine de travail agricole (1) incluant un équipement de détection d'environnement (29) selon la revendication 1, **caractérisée en ce que** l'équipement de détection d'environnement (29) est conformé en scanner (72) qui, pour la palpation, émet des signaux de détection d'environnement (42), qui reçoit en retour les signaux de détection d'environnement réfléchis (42) et qui, à partir de ceux-ci, génère un signal résultant (50).

4. Machine de travail agricole (1) incluant un équipement de détection d'environnement (29) selon une des revendications précédentes, **caractérisée en ce que** l'environnement (58) est formé par une partie de la surface utile agricole (54) se trouvant dans le sens de marche (52) et à portée du signal de détection d'environnement (42).

5. Machine de travail agricole (1) incluant un équipement de détection d'environnement (29) selon la revendication 4, **caractérisée en ce que** l'extension latérale de l'environnement (58) excède au moins en partie la largeur de la machine de travail agricole (1), la largeur de la machine de travail agricole (1) pouvant inclure des organes (28) rapportés sur celle-ci.

6. Machine de travail agricole (1) incluant un équipement de détection d'environnement (29) selon une des revendications précédentes, **caractérisée en ce que** l'équipement de commande et de réglage (33) calcule, à partir du temps de propagation d'impulsions du signal de détection d'environnement réfléchi (42), une distance et/ou une densité de répartition.

7. Machine de travail agricole (1) incluant un équipement de détection d'environnement (29) selon une des revendications précédentes, **caractérisée en ce que** l'équipement de commande et de réglage (33) calcule, à partir des distances et/ou densités de répartition calculées, un contour de sol et/ou une variation de densité de culture et/ou cartographie numériquement la surface utile agricole (54).

8. Machine de travail agricole (1) incluant un équipement de détection d'environnement (29) selon une des revendications précédentes, **caractérisée en ce que** l'élément fonctionnel (30) inclut un ou plusieurs organes de travail (36) d'une machine de travail agricole (1), préférentiellement d'une machine de récolte automotrice, préférentiellement d'une moissonneuse-batteuse (2), et/ou un véhicule de transport accompagnant la machine de travail agricole (1).

9. Machine de travail agricole (1) incluant un équipement de détection d'environnement (29) selon une des revendications précédentes, **caractérisée en ce qu'**à un, plusieurs ou tous les plans de scannage (43) est associée la commande d'un, plusieurs ou tous les éléments fonctionnels (30).

10. Machine de travail agricole (1) incluant un équipement de détection d'environnement (29) selon la revendication 9, **caractérisée en ce qu'**une commande précise à court terme des éléments fonctionnels (30) s'effectue par évaluation des plans de scannage (43) situés dans la zone proche (37) et une commande approximative précoce des éléments fonctionnels (30) s'effectue par évaluation d'un ou plusieurs plans de scannage (43) situés dans la zone médiane (38) et/ou lointaine (39).

11. Machine de travail agricole (1) incluant un équipement de détection d'environnement (29) selon une des revendications 1 à 10, **caractérisée en ce que** l'équipement de détection d'environnement (29) génère, par évaluation d'un signal de détection d'environnement (42) d'un des plusieurs ou de plusieurs plans de scannage (43), un signal résultant (50) qui inclut la position d'un obstacle (65) dans l'environnement (58), et **en ce que** le signal résultant (50) est transmis à l'unité de commande et de régulation (33), et l'équipement de commande et de réglage (33) génère, à partir de ce signal résultant (50), des signaux de direction et/ou ou de commande pour un ou plusieurs éléments fonctionnels (30) de la machine de travail agricole (1).

12. Machine de travail agricole (1) incluant un équipement de détection d'environnement (29) selon la revendication 11, **caractérisée en ce que** les éléments fonctionnels (30) comportent le système de direction hydraulique (80), le système d'entraînement (81), le système de freinage hydraulique (81) et/ou le tablier de coupe (3).

13. Machine de travail agricole (1) incluant un équipement de détection d'environnement (29) selon la revendication 11, **caractérisée en ce que** la détection d'obstacles bas et/ou petits (67) s'effectue par évaluation des plans de scannage (43) situés dans la zone proche (37), et la détection d'obstacles hauts et/ou volumineux (66) s'effectue par évaluation d'un ou plusieurs plans de scannage (43) situés dans la zone médiane (38) et/ou lointaine (39).

14. Machine de travail agricole (1) incluant un équipement de détection d'environnement (29) selon une des revendications 1 à 10, **caractérisée en ce que** l'équipement de détection d'environnement (29) génère, par évaluation d'un signal de détection d'environnement (42) d'un ou plusieurs plans de scannage (43), un signal résultant (50) qui inclut la position de bords de récolte, la hauteur de récolte (90), la variation de hauteur de récolte et/ou la variation de bords de récolte dans l'environnement (58) et qui est transmis à l'unité de commande et de régulation (33), laquelle génère, à partir de ce signal résultant (50), des signaux de direction et/ou ou de commande pour un ou plusieurs éléments fonctionnels (30) de la machine de travail agricole (1), qui comportent le système de direction hydraulique (80) et/ou le rabatteur (5).

15. Machine de travail agricole (1) incluant un équipement de détection d'environnement (29) selon une des revendications 1 à 10, **caractérisée en ce que** l'équipement de détection d'environnement (29) génère, par évaluation d'un signal de détection d'environnement (42) d'un ou plusieurs plans de scannage (43), un signal résultant (50) qui inclut l'extrémité de champ (71) dans l'environnement (58) et qui est transmis à l'unité de commande et de régulation (33), laquelle génère, à partir de ce signal résultant (50), des signaux de direction et/ou ou de commande pour un ou plusieurs éléments fonctionnels (30) de la machine de travail agricole (1), qui comportent le système de direction hydraulique (80), le système de freinage hydraulique (82), le système d'entraînement (81) et/ou le tablier de coupe (3).
